# NEUE EUROPÄISCHE PATENTSCHRIFT

(11) **EP 0 549 560 B2**
(45) Veröffentlichungstag und Bekanntmachung des Hinweises auf die Entscheidung über den Einspruch: **10.09.2003**
(45) Hinweis auf die Patenterteilung: 28.05.1997
(21) Anmeldenummer: 92890264.2
(22) Anmeldetag: 17.12.1992
(51) Int. Cl.: H01L 31/042, H01L 31/048, E04D 13/18

(54) **Einrichtung zur Umwandlung von Lichtenergie in elektrischen Strom**
Device to convert light-energy into electric current
Dispositif permettant la transformation d'une énergie lumineuse en courant électrique

(30) Priorität: 23.12.1991 AT 255391
(43) Veröffentlichungstag der Anmeldung: 30.06.1993
(73) Patentinhaber: Sedelmayer, Roland, A-1100 Wien (AT); Sedelmayer, Rainer, Mag., A-1100 Wien (AT)
(72) Erfinder: Sedelmayer, Roland, A-1100 Wien (AT); Sedelmayer, Rainer, Mag., A-1100 Wien (AT)
(74) Vertreter: Atzwanger, Richard, Dipl.-Ing. Patentanwalt

(56) Entgegenhaltungen:
- DE-A- 2 946 525
- DE-A- 3 737 183
- DE-A- 3 737 183
- JP-A- 6 282 157
- JP-U- 6 252 610
- JP-U- 6 344 928
- JP-U- 61 194 039
- US-A- 4 796 400
- NTIS TECH NOTES Nr. 1C, Januar 1985, SPRINGFIELD, VA US Seite 79 DRUMMOND ET AL. 'PHOTOVOLTAIC ROOFS'
- PATENT ABSTRACTS OF JAPAN vol. 11, no. 148 (E-506)14. Mai 1987 & JP-A-61 287 277.
- PATENT ABSTRACTS OF JAPAN vol. 11, no. 148 (E-506)14. Mai 1987 & JP-A-61 287 278.
- PATENT ABSTRACTS OF JAPAN vol. 15, no. 151 (M-1103)16. April 1991 & JP-A-30 25 146.
- NTIS Tech. Notes Nr. Ic Januar 1985, Springfield VA (USA), Seite 79

## Beschreibung

Die gegenständliche Erfindung betrifft einen photovoltaischen Sonnenkollektor zur Anordnung auf einem Dachelemente aufweisenden Dach gemäß den Merkmalen des Oberbegriffes des Patentanspruches 1.

Bekannte photovoltaische Sonnenkollektoren, welche zur Befestigung auf Dächern bestimmt sind, bestehen aus einer mit Photoelementen ausgebildeten Grundplatte und einer über dieser befindlichen Abdeckplatte aus lichtdurchlässigem Material, wobei die beiden Platten durch einen metallischen Rahmen eingefaßt sind. Diese bekannten Sonnenkollektoren sind jedoch insoferne nachteilig, da auf den Dächern zusätzliche Vorrichtungen zu deren Befestigung vorgesehen sein müssen, wobei dann die elektrischen Anschlußleitungen durch die Dachhaut hindurchgeführt werden müssen. Soferne demgegenüber derartige photovoltaische Sonnenkollektoren in in der Dachhaut vorgesehene Aussparungen eingesetzt werden, besteht das Erfordernis, diese längs ihrer Ränder gegenüber der Dachhaut abzudichten. Unabhängig davon, ob die bekannten Sonnenkollektoren oberhalb der Dachhaut oder in einer in dieser befindlichen Aussparung angeordnet werden, besteht weiters deshalb, da deren Rahmen aus metallischem Material gefertigt sind, das Erfordernis, dieselben zu erden.

Aus der US-A-4 336 413 ist eine Einrichtung zur Umwandlung von Lichtenergie in elektrischen Strom bekannt, welche aus einem aus Aluminium gefertigten Rahmen besteht, von welchem eine Platte, welche mit Solarzellen ausgebildet ist, getragen ist. Dabei ist der Rahmen aus vier Balken gefertigt, welche an den Ecken miteinander durch Verschraubungen verbunden sind. Die Trennbarkeit der Rahmenbalken voneinander ist deshalb erforderlich, um die Platte in den Rahmen einsetzen bzw. im Bedarfsfall aus dem Rahmen wieder entnehmen zu können.

Aus der US-A-4 636 577 ist weiters eine Einrichtung zur Umwandlung von Lichtenergie in elektrischen Strom bekannt, welche aus einer Platte besteht, welche mit Solarzellen ausgebildet ist und welche gleichtalls mit einem Rahmen ausgebildet ist.

Aus der DE-A-37 37 183 ist ein Sonnenkollektor bekannt, welcher mit einem Rahmen aus elektrisch isolierendem Material hergestellt ist.

Ein photovoltaischer Sonnenkollector gemäß dem Oberbegriff des Patentanspruches 1 ist aus der JP 63-44 928 bekannt.

Demgegenüber liegt der gegenständlichen Erfindung die Aufgabe zugrunde, einen photovoltaischen Sonnenkollektor so auszubilden, daß die dem Stand der Technik anhaftenden Nachteile dadurch vermieden werden, daß er einen integralen Bestandteil eines Daches darstellt. Dies wird erfindungsgemäß durch die Merkmale des kennzeichnenden Teiles des Patentanspruches 1 erzielt.

Dabei kann das Solarelement innerhalb der rahmenförmigen Leiste mit Hilfe einer Halteleiste aus nichtmetallischem Material an der rahmenförmigen Leiste befestigt sein.

Vorzugsweise sind zwischen dem Rahmen, einer im Querschnitt gesehen winkelförmigen Halteleiste und dem Solarelement Dichtungselemente angeordnet, weist die Halteleiste eine metallische Verstärkung auf und ist der an das Solarelement zur Anlage kommende Schenkel der Halteleiste geknickt ausgebildet.

Ein erfindungsgemäßer photovoltaischer Sonnenkollektor ist nachstehend anhand eines in der Zeichnung dargestellten Ausführungsbeispieles näher erläutert. Es zeigen:
- Fig. 1: die Draufsicht auf ein Dach mit einem erfindungsgsgemäßen Sonnenkollektor,
- Fig. 2: den erfindungsgemäßen Sonnenkollektor, in axonometrischer Darstellung,
- Fig. 3: ein Detail eines erfindungsgemäßen Sonnenkollektors, im Schnitt nach der Linie III-III der Fig. 2 und in gegenüber Fig. 2 vergrößertem Maßstab,
- Fig. 4: ein weiteres Detail, im Schnitt,
- Fig. 5: ein Element zur Befestigung eines erfindungsgemäßen Sonnenkollektors, im Schnitt, und
- Fig. 6: ein weiteres Detail, in axonometrischer Darstellung.

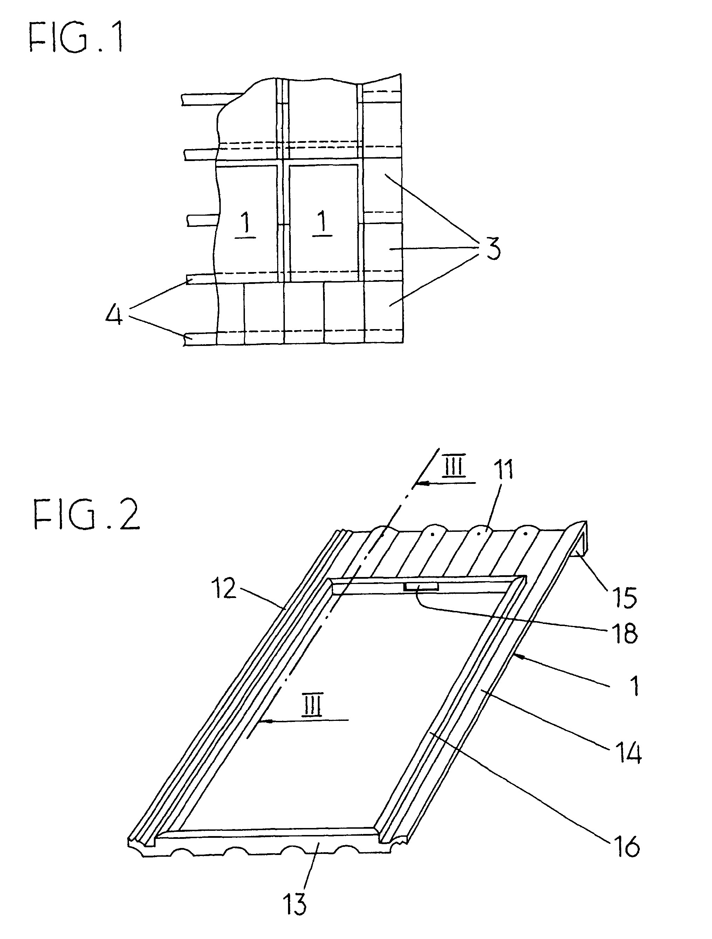

In Fig. 1 ist ein Teil eines Daches dargestellt, welches aus einer Vielzahl von Dachelementen 3, wie Dachziegeln oder aus Asbestzement gefertigten, gewellten Platten, besteht. Diese Dachelemente 3 sind an einem ihrer Ränder, welcher sich im Dach an deren Oberseite befindet, mit quer nach unten abragenden Leisten, Vorsprüngen od.dgl. ausgebildet, mit welchen sie an die Dachsparren 4 anliegen und hierdurch in ihrer Lage am Dach gehalten sind. Das Dach weist weiters eine Mehrzahl von photovoltaischen Sonnenkollektoren 1 auf, wobei jeweils ein solcher Sonnenkollektor 1 eine Gruppe von vier nebeneinander befindlichen Dachelementen 3 ersetzt.

Die Ausbildung eines derartigen photovoltaischen Sonnenkollektors ist nachstehend anhand der Fig. 2 bis 6 erläutert:

Wie dies aus Fig. 2 ersichtlich ist, ist dieser Sonnenkollektor 1 rahmenförmig ausgebildet, wobei er an seinen vier Rändern die gleiche Ausbildung wie die für die Deckung des Daches verwendeten Dachelemente 3 aufweist, sodaß er anstelle eines Dachelementes 3 oder anstelle einer Gruppe derartiger Dachelemente einen Teil der Dachhaut bildet und an die anderen Dachelemente abdichtend anschließt.

Demnach ist dieser Sonnenkollektor 1 an seinem am Dach an der oberen Seite zu liegen kommenden Rand 11 mit einer nach unten abragenden Leiste 15 ausgebildet, mit welcher er in die Dachsparren 4 eingehängt wird. Im Dachverband wird dieser Rand 11 vom unteren Rand des darüber befindlichen Dachelementes 3 überdeckt, wobei die aneinander zu liegen kommenden Ränder eine gegengleiche Ausbildung aufweisen. In analoger Weise sind die Ränder 12, 13 und 14 dieses Sonnenkollektors 1 ebenso geformt, wie die zugeordneten Ränder der für die Dachhaut verwendeten Dachelemente, wobei aneinander überdeckende Ränder gegengleich ausgebildet sind. Demnach ist der untere Rand 13 gegengleich zum oberen Rand 11 ausgebildet. Ebenso sind die beiden seitlichen Ränder 12 und 14 gegengleich ausgebildet. Die Ränder 11, 12, 13 und 14 ragen von einem Rahmen 16 ab, welcher eine Aussparung, in welche ein Solarelement eingesetzt ist, umschließt und welcher aus elektrisch isolierendem Material gefertigt ist.

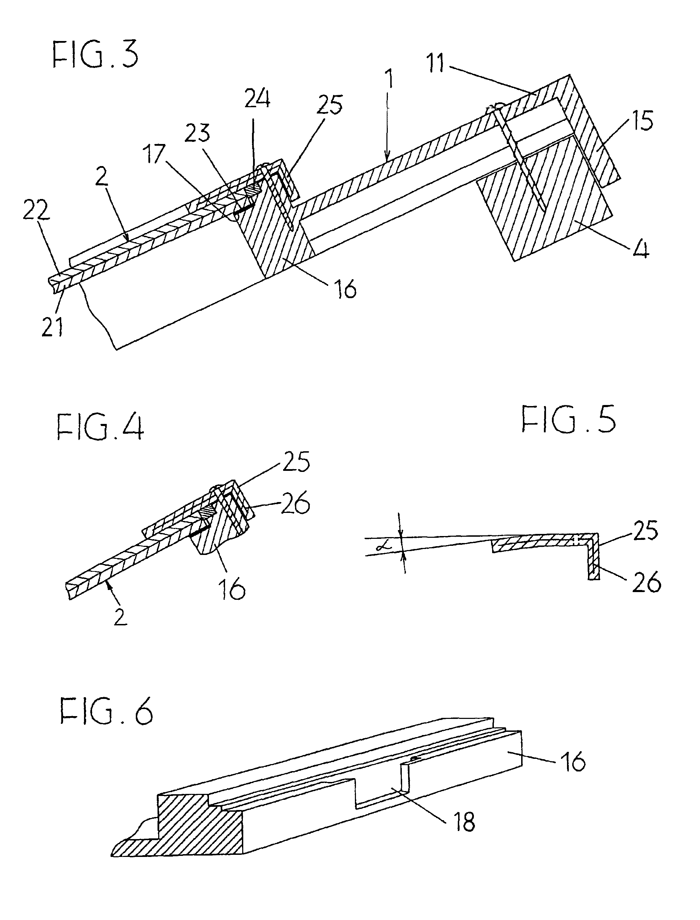

Wie dies aus Fig. 3 ersichtlich ist, besteht das Solarelement 2 aus einer unteren Trägerplatte 21, auf deren Oberseite sich Photoelemente befinden, und aus einer oberen Abdeckplatte 22 aus lichtdurchlässigem Material. Der Rahmen 16 ist an seiner Innenseite mit einem Absatz 17 ausgebildet, auf welchem das Solarelement 2 unter Zwischenlage von Dichtungsleisten 23 aufliegt, wobei ringsumlaufend eine weitere Dichtungsleiste 24 vorgesehen ist. Das Solarelement 2 ist mittels einer abgewinkelten Leiste 25, welche am Rahmen 16 z.B. mittels Verschraubung, befestigt ist, gehalten. Durch diese Anordnung ist das Solarelement 2 schwimmend befestigt, wodurch das Auftreten von Wärmespannungen vermieden wird.

In Fig. 4 ist die Leiste 25 vergrößert dargestellt. Diese besteht aus elektrisch nicht leitendem Material, z.B. Kunststoff, welches mit einer z.B. aus Metall gefertigten Verstärkung 26 ausgebildet ist. Wie dies weiters aus Fig. 5 ersichtlich ist, kann der längere Schenkel der Leiste 25 geknickt ausgebildet sein, um hierdurch eine federnde Befestigung des Solarelementes 2 zu bewirken. Wie dies weiters aus Fig. 6 ersichtlich ist, ist der Rahmen 16 im Bereich seiner Oberseite mit einer Aussparung 18, welche zur Aufnahme von elektrischen Anschlußarmaturen des Solarelementes 2 dient, ausgebildet.

Da der Sonnenkollektor 1 in seinem Randbereichen ebenso ausgebildet ist wie die übrigen Dachelemente, welche für die Dachdeckung verwendet sind, bildet er einen Teil der Dachhaut und besteht kein Erfordernis, weitere Maßnahmen für dessen Abdichtung gegenüber den anschließenden Dachelementen zu treffen. Weiters ist eine natürliche Hinterlüftung der Dachhaut gewährleistet, wodurch Wärmespannungen vermieden werden. Schließlich ist diese Anordnung weitestgehend gegen Diebstahl gesichert.
Da weiters der Sonnenkollektor aus elektrisch nicht leitendem Material gefertigt ist, besteht kein Erfordernis einer Erdung und wird das Auftreten von korrodierenden Strömen vermieden.

Soferne das Solarelement 2 beschädigt oder funktionsunfähig wird, braucht nur die Halteleiste 25 gelöst und entfernt zu werden, worauf ein neues Solarelement 2 eingesetzt werden kann.

## Patentansprüche

1. Photovoltaischer Sonnenkollektor (1) zur Anordnung auf einem Dachelemente (3) aufweisenden Dach mit einem Rahmen (16), welcher aus elektrisch isolierendem Material gefertigt ist, einem an diesem befestigten, aus einer mit Photoelementen versehen Grundplatte sowie einer darüber befindlichen Abdeckplatte aus lichtdurchlässigem Material gebildeten Solarelement (2) und mit elektrischen Anschlüssen, wobei der Rahmen (16) in seinen vier äußeren Randbereichen in Form eines der Dachelemente (3) oder einer Gruppe von aneinander liegenden Dachelementen (3) zum abdichtenden Anschluß an die anderen Dachelemente ausgebildet ist, wodurch der Sonnenkollektor als Bestandteil der Dachdeckung verwendbar ist, weiters der Rahmen (16) an seinem inneren Rand einen umlaufenden Absatz (17) aufweist, auf welchem das Solarelement (2) aufliegt und zudem der Rahmen (16) eine nach oben ragende, rahmenförmige, das Solarelement (2) umschließende Leiste aufweist, an welche seitlich abdichtende Randbereiche (11, 12, 13, 14) anschließen, **dadurch gekennzeichnet, daß** der Sonnenkollektor (1) an seinem am Dach an der oberen Seite zu liegen kommenden Rand (11) mit einer nach unten abragenden Leiste (15) ausgebildet ist, mit welcher er in die Dachsparren (4) einhängbar ist, wobei im Dachverband dieser Rand (11) vom unteren Rand des darüber befindlichen Dachelementes (3) überdeckt wird, daß der Rahmen (16) an seinem inneren Rand mit einer nach oben offenen, unterhalb der Auflagefläche des Kollektors befindlichen Ausnehmung (18) zur Aufnahme von elektrischen Anschlußarmaturen ausgebildet ist und daß auf dem Absatz (17) eine Auflage (23) aus dauereleastischem Material angeordnet ist.

2. Einrichtung nach Patentanspruch 1, **dadurch gekennzeichnet, daß** das Solarelement (2) innerhalb des Rahmens (16) mittels einer Halteleiste (25) aus nichtmetallischem Material befestigt ist.

3. Einrichtung nach Patentanspruch 1, **dadurch gekennzeichnet, daß** zwischen dem Rahmen (16), einer im Querschnitt gesehen winkelförmigen Halteleiste (25) und dem Solarelement (2) Dichtungselemente (24) angeordnet sind.

4. Einrichtung nach einem der Patentansprüche 2 und 3, **dadurch gekennzeichnet, daß** die Halteleiste (25) eine metallische Verstärkung (26) aufweist.

5. Einrichtung nach einem der Patentansprüche 2 bis 4, **dadurch gekennzeichnet, daß** der an das Solarelement (2) zur Anlage kommende Schenkel der Halteleiste (25) geknickt ausgebildet ist.

## Claims

1. Photovoltaic solar collector [1] for arranging on a roof having roofing elements [3], with a frame [16] fabricated from electrically insulating material, with, fastened to said frame, a solar element (2) formed from a baseplate provided with photoelements and from a cover plate of light-transmitting material situated over said baseplate, and with electrical connections, the frame [16] being designed in its four outer edge regions in the form of one of the roofing elements [3], or of a group of roofing elements [3] lying one against the other, in order to provide a sealing connection with the other roofing elements, which makes it possible to use the solar collector as a component of the roof covering, the frame [16] furthermore having, at its inner edge, a peripheral shoulder [17] on which the solar element [2] lies, and the frame [16] additionally having an upward-projecting, frame-like strip that encloses the solar element [2] and is adjoined by laterally sealing edge regions [11, 12, 13, 14], **characterized in that**, at its edge [11] which comes to lie on the roof at the upper side, the solar collector [1] is designed with a downward-projecting strip [15] by means of which it can be suspended in the roofing battens [4], and, in the roof assembly, this edge [11] being covered by the lower edge of the roofing element [3] situated above it, **in that** the frame [16] is designed, at its inner edge, with a cutout [18] which is open at the top, is situated underneath the bearing surface of the collector and is intended for housing electrical connection fittings, and **in that** a support [22] made of permanently elastic material is arranged on the shoulder [17].

2. Device according to Patent Claim 1, **characterized in that** the solar element [2] is fastened within the frame [16] by means of a retaining strip [25] made of non-metallic material.

3. Device according to Patent Claim 1, **characterized in that** sealing elements [24] are arranged between the frame [16], a retaining strip [25] which is angular, as seen in cross section, and the solar element [2].

4. Device according to either of Patent Claims 2 and 3, **characterized in that** the retaining strip [25] has a metal reinforcement [26].

5. Device according to one of Patent Claims 2 to 4, **characterized in that** the leg of the retaining strip [25] that comes to rest on the solar element [2] is designed to be kinked.

## Revendications

1. Collecteur solaire (1) photovoltaïque à placer sur un toit, présentant des éléments de toit (3), avec un cadre (16) qui est réalisé dans un matériau électriquement isolant, une plaque de base, fixée sur celui-ci, pourvue de photo-éléments ainsi qu'une plaque de couverture, se trouvant dessus, faite d'un élément solaire en matériau translucide et avec des branchements électriques, le cadre (16) ayant la forme, dans ses quatre zones de bordure extérieures, d'un élément de toit (3) ou d'un groupe d'éléments de toit (3) juxtaposés, pour le raccordement étanche aux autres éléments de toit, ce qui fait que le collecteur solaire peut être utilisé comme faisant partie intégrante de la couverture du toit, le cadre (16) présentant en outre, sur son bord intérieur, un gradin (17) périphérique sur lequel repose l'élément solaire (2), et le cadre (16) présentant une baguette dirigée vers le haut, en forme de cadre, enfermant l'élément solaire (2), à cette baguette se raccordant des zones de bordure (11, 12, 13, 14) qui assurent latéralement l'étanchéité, **caractérisé en ce que** le collecteur solaire (1) présente sur son bord (11) venant se trouver sur le toit, sur la face supérieure, une baguette (15) dépassant vers le bas par laquelle il est accroché dans les chevrons (4), de sorte que dans la charpente ce bord (11) est recouvert par le bord inférieur de l'élément de toit se trouvant au-dessus, **en ce que** le cadre (16) est pourvu, sur son bord intérieur, d'un évidemment (18) ouvert vers le haut se trouvant au-dessous de la surface d'appui du collecteur, destiné à recevoir des accessoires de branchement électrique, et **en ce que** sur le gradin (17) est placé un support (23) en matériau élastique permanent.

2. Dispositif selon la revendication 1, **caractérisé en ce que** l'élément solaire (2) est fixé à l'intérieur du cadre(16) au moyen d'une baguette de maintien (25) en matériau non métallique.

3. Dispositif selon la revendication 1, **caractérisé en ce qu'**entre le cadre (16), une baguette de maintien (25) de forme angulaire, vue dans sa section transversale, et l'élément solaire (2), sont prévus des éléments d'étanchéité (24).

4. Dispositif selon l'une des revendications 2 et 3, **caractérisé en ce que** la baguette de maintien (25) présente un renfort (26) métallique.

5. Dispositif selon l'une des revendications 2 à 4, **caractérisé en ce que** la branche, venant en application contre l'élément solaire (2) de la baguette de maintien (25), est pliée.
